# EUROPÄISCHE PATENTSCHRIFT

(11) **EP 1 512 881 B1**
(45) Veröffentlichungstag und Bekanntmachung des Hinweises auf die Patenterteilung: **22.11.2006**
(21) Anmeldenummer: 04020811.8
(22) Anmeldetag: 02.09.2004
(51) Int. Cl.: F16D 21/06, F16D 13/75, F16D 13/58

(54) **Kupplungsaggregat**
Clutch assembly
Dispositif d'embrayage

(30) Priorität: 03.09.2003 DE 10340530
(43) Veröffentlichungstag der Anmeldung: 09.03.2005
(73) Patentinhaber: Luk Lamellen und Kupplungsbau GmbH, 77815 Bühl (DE)
(72) Erfinder: Raber, Christoph, 66564 Ottweiler-Steinbach (DE); Reimnitz, Dirk, 77815 Bühl (DE); Friedmann, Oswald, 77839 Lichtenau (DE); Meinhard, Rolf, 77815 Bühl (DE); Schäfer, Markus, 76669 Bad-Schönborn (DE); Reik, Wolfgang, Dr., 77815 Bühl (DE); Wuhrer, Alexander, 69226 Nussloch (DE)

(56) Entgegenhaltungen:
- WO-A-00/57080
- DE-A- 2 027 729
- US-A1- 2001 025 760
- US-A1- 2002 144 875

## Beschreibung

Die Erfindung betrifft ein Kupplungsaggregat zur Drehmomentübertragung zwischen einem Motor und einem Getriebe, mit mehreren, insbesondere zwei Reibungskupplungen, die jeweils eine Druckplatte umfassen, die drehfest, jedoch axial begrenzt verlagerbar in einem Gehäuse angeordnet ist, wobei zwischen Gehäuse und Druckplatte eine Tellerfeder wirksam ist, durch welche die Druckplatte in Richtung einer zwischen dieser und einer Gegendruckplatte einklemmbaren Kupplungsscheibe mit Reibbelägen beaufschlagbar ist.

Kupplungsaggregate mit zwei Reibungskupplungen sind zum Beispiel durch die US 2001/0025760 A1 bekannt. Bei diesen Kupplungsaggregaten werden die beiden Kupplungen über eine Tellerfeder immer gleichzeitig betätigt, und zwar gegensinnig.

Herkömmliche Kupplungsaggregate sind oft kompliziert aufgebaut und demzufolge teuer in der Herstellung. Aufgabe der Erfindung ist es daher, ein Kupplungsaggregat zu schaffen, das einfach aufgebaut und kostengünstig herstellbar ist.

Die Aufgabe ist bei einem Kupplungsaggregat zur Drehmomentübertragung zwischen einem Motor und einem Getriebe, mit mehreren, insbesondere zwei Reibungskupplungen, die jeweils eine Druckplatte umfassen, die drehfest, jedoch axial begrenzt verlagerbar gegenüber einem Gehäuse angeordnet ist, wobei zwischen Gehäuse und Druckplatten eine Tellerfeder wirksam ist, durch welche die Druckplatten in Richtung einer zwischen dieser und einer Gegendruckplatte einklemmbaren Kupplungsscheibe mit Reibbelägen beaufschlagbar sind, dadurch gelöst, dass die Druckplatten der Reibungskupplungen durch eine einzige Tellerfedereinrichtung beaufschlagbar sind, die verschiedene Hebel aufweist, von denen einige mit der Druckplatte einer der Reibungskupplungen und die anderen Hebel mit der Druckplatte der anderen Reibungskupplung zusammenwirken. Das liefert den Vorteil, dass in axialer Richtung nur wenig Bauraum benötigt wird.

Ein bevorzugtes Ausführungsbeispiel des Kupplungsaggregats ist dadurch gekennzeichnet, dass die Tellerfedereinrichtung einen Ringkörper aufweist, von dem sich radial nach innen eine Vielzahl von Tellerfederhebeln erstrecken, von denen jeweils zwei benachbarte Tellerfederhebel unterschiedlichen Kupplungen zugeordnet sind. Es wird also nur eine einzige Tellerfeder zur Beaufschlagung mehrerer Kupplungen benötigt. Dadurch werden die Herstellkosten deutlich reduziert.

Ein weiteres bevorzugtes Ausführungsbeispiel des Kupplungsaggregats ist dadurch gekennzeichnet; dass die Tellerfederhebel über Druckringe betätigbar sind, wobei jeweils ein Druckring einer Kupplung zugeordnet ist, und dadurch, dass die Druckplatten jeweils über einen Stößel durch die zugehörigen Tellerfederhebel beaufschlagbar sind, wobei die Druckringe und die Stößel so ausgebildet sind, dass ein Ineinandergreifen der bewegten Teile ermöglicht wird. Dadurch wird gewährleistet, dass alle Tellerfederhebel in einer Ebene angeordnet sein können, was aus fertigungstechnischer Sicht Vorteile bietet.

Ein weiteres bevorzugtes Ausführungsbeispiel des Kupplungsaggregats ist dadurch gekennzeichnet, dass der Stößel unter Zwischenschaltung eines Verformungselements mit einem Verstellring einer Verschleißnachstelleinrichtung zusammenwirkt. Das Verformungselement dient dazu, den Verschleiß der zugeordneten Kupplung zu detektieren und verformt sich, wenn der Verschleiß einen vorgegebenen Wert überschreitet.

Die oben angegebene Aufgabe ist bei einem Kupplungsaggregat zur Drehmomentübertragung zwischen einem Motor und einem Getriebe, mit mindestens zwei Reibungskupplungen, die jeweils eine Druckplatte umfassen, die drehfest jedoch axial begrenzt verlagerbar gegenüber einem Gehäuse angeordnet ist, wobei zwischen Gehäuse und Druckplatten eine Tellerfeder wirksam ist, durch welche die Druckplatten in Richtung einer zwischen dieser und einer Gegendruckplatte einklemmbaren Kupplungsscheibe mit Reibbelägen beaufschlagbar sind, dadurch gelöst, dass die Tellerfeder einen Ringkörper aufweist, der eine Vielzahl von separaten Tellerfederhebeln trägt, die sich im Wesentlichen in radialer Richtung nach innen erstrecken, wobei einige der Tellerfederhebel zum Betätigen der einen Reibungskupplung und die anderen Tellerfederhebel zum Betätigen der anderen Reibungskupplung dienen. Diese Konstruktion der Tellerfeder ermöglicht es, verschiedene Arten von Tellerfederhebeln an ein und demselben Ringkörper anzubringen. Dadurch ergeben sich vielfältige Anwendungsmöglichkeiten bei Kupplungsaggregaten mit einer Kupplung oder mit mehreren Kupplungen. Es können für verschiedene Kupplungen unterschiedliche Tellerfederhebel an ein und demselben Ringkörper angebracht sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind.

Es zeigen:
- Figur 1: ein zugedrücktes Doppelkupplungsaggregat mit Verschleißnachstellung gemäß einer ersten Ausführungsform;
- Figur 2: ein Doppelkupptungsaggregat, das dem in Figur 1 dargestellten ähnelt, mit einem Verformungselement;
- Figur 3: ein Verformungselement in perspektivischer Darstellung;
- Figur 4: ein Verformungselement gemäß einer weiteren Ausführungsform in der Draufsicht;
- Figur 5: die Ansicht eines Schnitts entlang der Linie VI - VI in Figur 4;
- Figur 6: eine mäanderförmige Tellerfeder;
- Figur 7: einen Kupplungsdeckel mit Aussparungen für Teile der in Figur 6 dargestellten Tellerfeder;
- Figur 8: den Kupplungsdeckel aus Figur 7 mit eingebauter Tellerfeder;
- Figur 9: den Kupplungsdeckel aus Figur-8 mit eingebautem Klemmring;
- Figur 10: den Kupplungsdeckel aus Figur 9 mit eingebautem Anschlagring;
- Figur 11: den Kupplungsdeckel aus Figur 10 mit eingebauten Klemmblattfedem;
- Figur 12: einen inneren Rampenring;
- Figur 13: einen äußeren Rampenring;
- Figur 14: die beiden Rampenringe aus den Figuren 12 und 13 im zusammengebauten Zustand;
- Figur 15: eine Anpressplatte in Alleinstellung;
- Figur 16: die Anpressplatte aus Figur 15 mit dem inneren Rampenring aus Figur 12;
- Figur 17: einen Durchgriffring in Alleinstellung;
- Figur 18: den Durchgriffring aus Figur 17 mit dem äußeren Rampenring aus Figur 13;
- Figur 19: den Kupplungsring aus Figur 11 mit eingebauten Rampenringen;
- Figur 20: einen Schnitt durch die teilweise zusammengebaute Kupplung;
- Figur 21: einen Betätigungsring für eine der Kupplungen;
- Figur 22: einen Betätigungsring für die andere Kupplung;
- Figur 23: die beiden Betätigungsringe aus den Figuren 21 und 22 im zusammengesetzten Zustand;
- Figur 24: einen Schnitt durch die komplett zusammengebaute Doppelkupplung;
- Figur 25: die Verschleißnachstellung im unbetätigten Zustand;
- Figur 26: die Verschleißnachstellung im betätigten Zustand;
- Figur 27: die Verschleißnachstellung bei Verschleiß;
- Figur 28: den Vortriebsmechanismus der Verschleißnachstellung im betätigten Zustand und
- Figur 29: den Verschleißnachstellmechanismus nach dem Nachstellen im unbetätigten Zustand.

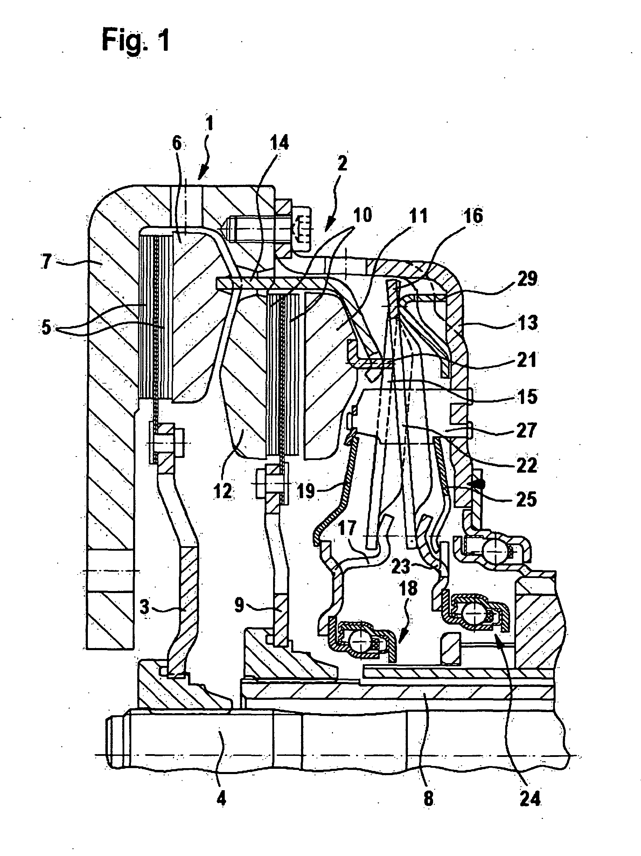

In Figur 1 ist ein Kupplungsaggregat mit einer zugedrückten Doppelkupplung und Verschleißnachstellung dargestellt. Die Doppelkupplung umfasst eine erste Kupplung 1 und eine zweite Kupplung 2. Die erste Kupplung 1 umfasst eine erste Kupplungsscheibe 3, die drehfest mit einer ersten Welle 4 verbunden ist. An der ersten Kupplungsscheibe 3 sind Reibbeläge 5 angebracht, die zur Drehmomentübertragung zwischen einer Druckplatte 6 und einer Gegendruckplatte 7 eingespannt werden können. Koaxial zu der ersten Welle 4 ist eine zweite Welle 8 angeordnet, die als Hohlwelle ausgebildet ist. Eine zweite Kupplungsscheibe 9 ist drehfest mit der zweiten Welle 8 verbunden. An der zweiten Kupplungsscheibe 9 sind Reibbeläge 10 angebracht, die zur Übertragung eines Drehmoments zwischen einer Druckplatte 11 und einer Gegendruckplatte 12 eingespannt werden können. Die Gegendruckplatte 12 ist einstückig mit der Gegendruckplatte 7. Die Druckplatten 6 und 11 sind relativ zu den Gegendruckplatten 7 und 12 axial bewegbar. Die Gegendruckplatten 7 und 12 sind fest mit einem Kupplungsdeckel 13 verbunden, der auch als Kupplungsgehäuse bezeichnet wird.

An der Druckplatte 6 der ersten Kupplung 1 greift ein Stößel 14 an. An dem Stößel 14 liegen Hebel 15 einer Tellerfedereinrichtung 16 an, die unter Zwischenschaltung eines Druckrings 17 durch einen Betätigungsmechanismus 18 betätigbar sind. Die Betätigungseinrichtung 18 wird durch eine Vorlastfeder 19, die sich an dem Kupplungsdeckel 13 abstützt, vorgespannt.

An der Druckplatte 11 der zweiten Kupplung 2 greift ein Stößel 21 an. An dem Stößel 21 wiederum liegt die Tellerfedereinrichtung 16 an, die unter Zwischenschaltung eines Druckrings 23 durch einen Betätigungsmechanismus 24 betätigbar ist. Der Betätigungsmechanismus 24 ist durch eine Vorlastfeder 25 vorgespannt, die sich an dem Kupplungsdeckel 13 abstützt. Die beiden Vorlastfedern 19 und 25 sind nicht direkt an dem Kupplungsdeckel 13 abgestützt, sondern indirekt unter Zwischenschaltung einer Abstützeinrichtung 27. Die Tellerfedereinrichtung 16 stützt sich nicht direkt am Kupplungsdeckel 13 ab, sondern an einem Verstellring 29, durch den im Betrieb insbesondere an den Kupplungsreibbelägen auftretender Verschleiß ausgeglichen werden kann. Der Verstellring 29 ist mit einem in Umfangsrichtung federvorgespannten Verstellring-Rampensystem ausgestattet; dessen Aufbau und Funktion als bekannt vorausgesetzt werden.

Das in Figur 1 dargestellte Konzept beruht auf der Nutzung einer Tellerfedereinrichtung 16 für beide Kupplungen 1 und 2. Die Tellerfedereinrichtung 16 weist jeweils benachbarte Hebel 15 und 22 auf, die im Wechsel den beiden Kupplungen 1 und 2 zugeordnet sind. Die Hebel 15 der Tellerfedereinrichtung 16 wirken über den Stößel 14 mit der Druckplatte 6 zusammen. Die Hebel 22 der Tellerfedereinrichtung 16 wirken über den Stößel 21 mit der Druckplatte 11 zusammen. Sowohl die Stößel 14, 21 als auch die Druckringe 17, 23 haben nur Kontakt zu den jeweils zugehörigen Hebeln 15, 22 der Tellerfedereinrichtung 16. In den Stößeln 14, 21 und den Druckringen 17, 23 sind Aussparungen ausgebildet, die ein Ineinandergreifen der sich bewegenden Bauteile im Betrieb des Kupplungsaggregats ermöglichen. Dadurch können beide Kupplungen 1 und 2 unabhängig voneinander betätigt werden, obwohl die Hebel 15, 22 der beiden Kupplungen 1 und 2 in einer Ebene liegen.

Um die Kupplungen 1 und 2 mit hydraulischen Einrücksystemen kombinieren zu können, muss die Rückstellkraft am Ausrücklager immer groß genug sein, um die Hydraulikzylinder in ihre Ausgangslage zurückzuschieben. Da zugedrückte Kupplungen am Anfang ihrer Einrückkraftkennlinie in dem Bereich zum Überwinden des Lüftspiels nur eine geringe Rückstellkraft aufweisen, sind die Vorlastfedern 19 und 25 erforderlich, um ein schnelles Öffnen zu garantieren. Die Vortastfedem 19 und 25 sind über den Betätigungsmechanismus 18, der Flachnieten umfassen kann, an dem Kupplungsdeckel 13 abgestützt und wirken auf die Druckringe 17 und 23 der Ausrücklager. Durch Verwendung von Vorlastfedern 19 und 25 mit einem degressiven Bereich kann deren Kraft absinken, wenn die zugehörige Kupplung auf die zwischen den Kupplungsbelägen 5, 10 angeordnete Belagfederung trifft.

Die in Figur 1 dargestellte Variante hat den Vorteil, dass sie in axialer Richtung wenig Bauraum benötigt. Zudem ist ein wesentlicher Vorteil, dass nur eine Tellerfedereinrichtung 16 benötigt wird. Für die beiden Kupplungen 1 und 2 können die gleichen Vorlastfedern verwendet werden. Darüber hinaus hat das Kupplungsaggregat in Figur 1 den Vorteil, dass die Einrückkraftkennlinie der Kupplungen 1 und 2 gut beeinflussbar ist.

Die in den Figuren 1 bis 5 dargestellten Verschleißnachstellmechanismen lassen sich nicht nur für Doppelkupplungen, sondern auch für Einfachkupplungen einsetzen. Die zugrunde liegenden Prinzipien lassen sich auch auf Nachstellungen übertragen, deren Verstellringe sich an den Anpressplatten befinden.

Bei gemeinsamen Verschleißnachstellungen erfolgt die Nachstellung beider Kupplungen immer synchron. Deshalb darf der Differenzverschleiß beider Kupplungen nicht zu groß werden. Daher muss die Steuerungssoftware in der Lage sein, den Differenzverschleiß zu erkennen und aktiv zu verringern. Das kann über eine gezielte Verschleißerhöhung an der weniger verschlissenen Kupplung erfolgen, zum Beispiel kann bei Kupplungen mit Schlupfregelung die Schlupfdrehzahl erhöht werden. Durch Auswahl des Anfahrgangs beziehungsweise der Verteilung des Anfahrmoments während der Rutschphase auf zwei Kupplungen kann die eine Kupplung stärker belastet und die andere geschont werden.

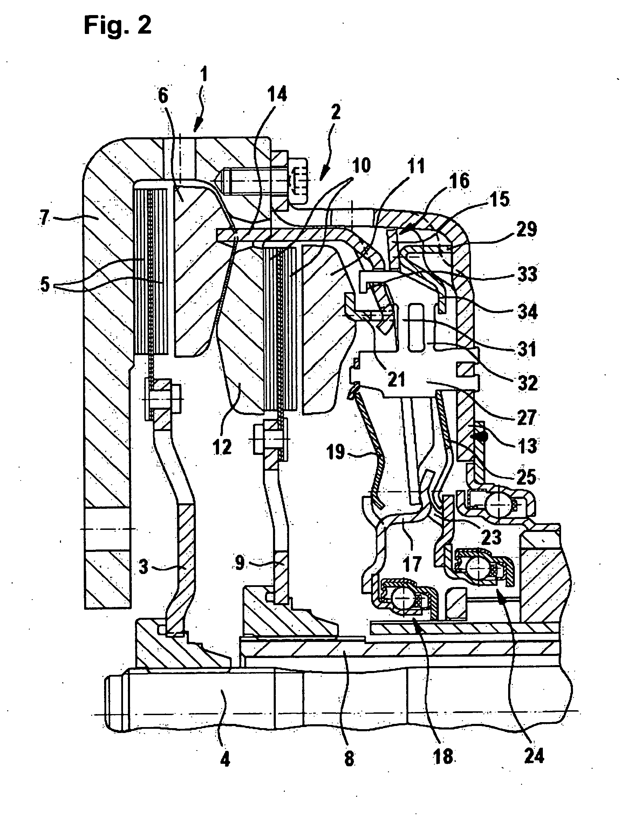

In Figur 2 ist das Doppelkupplungsaggregat aus Figur 1 mit einer gemeinsamen, weggesteuerten Verschleißnachstellung für beide Kupplungen 1 und 2 dargestellt. Die Nachstellung erfolgt über den Verstellring 29, der auf einer Rampe im Deckel läuft. Im Betrieb der Kupplungen 1 und 2 tritt, insbesondere an den Reibbelägen 5 und 10, Verschleiß auf. Der Verschleiß der Kupplung 1, bei der es sich um eine Anfahrkupplung handelt, wird durch das verformbare Element 27 detektiert. Das Verformungselement 27 weist mehrere plastisch oder elastisch verformbare Biegearme 31, 32 auf. Außerdem ist an dem Verformungselement 27 ein Anschlag 33 für den Stößel 14 ausgebildet. Durch Versetzen des Anschlages 33 kann auch die andere Kupplung 2 oder die jeweils stärker verschlissene Kupplung das Verstellen auslösen.

Wenn Verschleiß auftritt, verbiegt sich das Verformungselement 27 und gibt den Verstellring 29 frei. Außerdem weist das Verformungselement 27 einen Anschlag 34 für den Verstellring 29 auf. Der ebene Anschlag 34 führt zu einem parallelen Wandem der Hebelfedem. Durch eine Rampe zwischen Verformungselement und Verstellring kann das Verhältnis zwischen detektiertem Verschleiß und Nachstellung des Verstellrings beeinflusst werden. Dies hat Einfluss auf die Stellung der Zungen.

Die Verschleißnachstellung bei dem in Figur 2 dargestellten Kupplungsaggregat funktioniert wie folgt. Der Normalzustand herrscht, wenn seit der letzten Nachstellung kein Verschleiß aufgetreten ist, oder dieser noch zu gering ist, um eine erneute Nachstellung auszulösen. In diesem Zustand kommt der Stößel 14 beim Einrücken zur Anlage an dem Anschlag 33, die Biegearme 31, 32 der Verformungselemente 27 werden jedoch nicht plastisch verformt. Der Verstellring 29 wird in diesem Zustand durch die Verformungselemente 27 in axialer Richtung verklemmt und somit am Nachstellen gehindert.

Wenn an den Kupplungsbelägen 5 Verschleiß auftritt, dann vergrößert sich der Einrückweg der Druck- bzw. Anpressplatte 6. Der Stößel 14 kommt an dem Anschlag 33 zur Anlage und zieht das Verformungselement 27 zur Druck- bzw. Anpressplatte 11 hin. Dabei verformen sich die Biegearme 31 und 32 plastisch. Dadurch entsteht an dem Anschlag 34 ein Spiel. Solange mindestens eine der Kupplungen 1, 2 eingerückt ist, wird der Verstellring 29 durch die Klemmkräfte der Hebel 15 am Verdrehen gehindert.

Wenn daraufhin beide Kupplungen geöffnet werden, dann sinkt die Klemmkraft der Hebel 15 stark ab. Dieser Effekt wird im Betrieb der Kupplung durch dynamische Schwingungen zusätzlich unterstützt. Nun kann sich der von tangential angeordneten Druckfedem angetriebene Verstellring 29 verdrehen, bis er durch die Deckelrampe wieder am Anschlag 34 der Verformungselemente anliegt. Der Antrieb des Verstellrings 29 kann auch über Zugfedem oder spezielle Antriebsfedem erfolgen.

Der Verstellring 29 übt durch seinen Antrieb neben den axialen Kräften auch eine tangentiale Last auf die Verformungselemente 27 aus. Für den Fall, dass diese Last bei dem in Figur 2 dargestellten Verformungselement 27 zu einem seitlichen Verbiegen führen sollte, können die Verformungselemente 27 auch an Flachniete angenietet werden, welche die Verformungselemente seitlich abstützen.

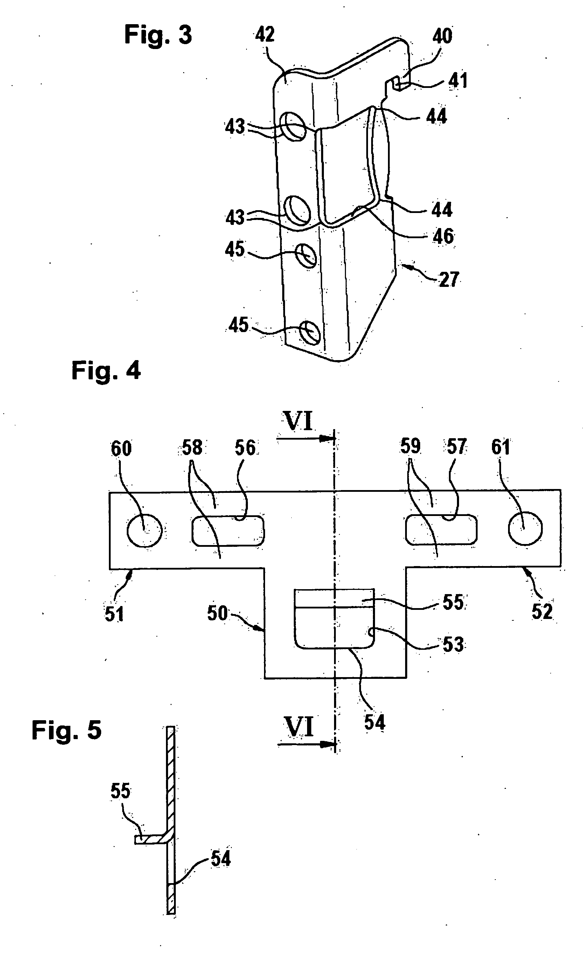

In Figur 3 ist eine perspektivische Darstellung eines Verformungselements 27 gezeigt, das in Verformungsrichtung weich, rechtwinklig dazu aber steif genug ist, um hohe Tangentialkräfte des Verstellrings 29 (in Figur 2) abzustützen. Das in Figur 3 gezeigte Verformungselement 27 umfasst einen im Wesentlichen plattenförmigen Grundkörper, an dem eine Nase 40 mit einem Anschlag 41 für den Stößel der zugehörigen Kupplung ausgebildet ist. Von dem im Wesentlichen plattenförmigen Grundkörper geht ein abgewinkelter Bereich 42 aus, der einen Anschlag für den Verstellring bildet. Der abgewinkelte Bereich 42 ist mit zwei kreisförmigen Aussparungen versehen, durch die Verformungsbereiche 43 gebildet werden. Außerdem sind in dem abgewinkelten Bereich 42 zwei Befestigungslöcher 45 zur Aufnahme von Befestigungselementen, wie Nieten, vorgesehen. Des Weiteren ist in dem plattenförmigen Grundkörper eine im Wesentlichen rechteckförmige Aussparung 46 vorgesehen, durch die weitere Verformungsbereiche 44 gebildet werden.

In den Figuren 4 und 5 ist ein im Wesentlichen T-förmiges Verformungselement in verschiedenen Ansichten dargestellt. Das T-förmige Verformungselement umfasst eine Basis 50, von der zwei Schenkel 51 und 52 ausgehen. In der Basis 50 ist eine im Wesentlichen rechteckförmige Aussparung 53 vorgesehen, deren eine Seite 54 einen Anschlag zur Verschleißerkennung bildet. Auf der gegenüberliegenden Seite wird die Aussparung 53 durch einen abgewinkelten Bereich 55 begrenzt, der einen Anschlag für den Verstellring bildet. In den beiden Schenkeln 51 und 52 ist jeweils eine im Wesentlichen rechteckförmige Aussparung 56, 57 vorgesehen. Durch die Aussparungen 56 und 57 werden vier Biegearme 58, 59 gebildet. An den äußeren Enden der Schenkel 51 und 52 sind Befestigungslöcher 60, 61 ausgespart. Das in den Figuren 4 und 5 dargestellte Verformungselement eignet sich besonders für eine tangentiale Anordnung.

Durch Verändem der Verformungselemente können diese auch durch radial innen liegende Bauteile, zum Beispiel Hebel oder Druckringe, verformt werden. Die Nachstellung kann von der Software gezielt ausgelöst werden.

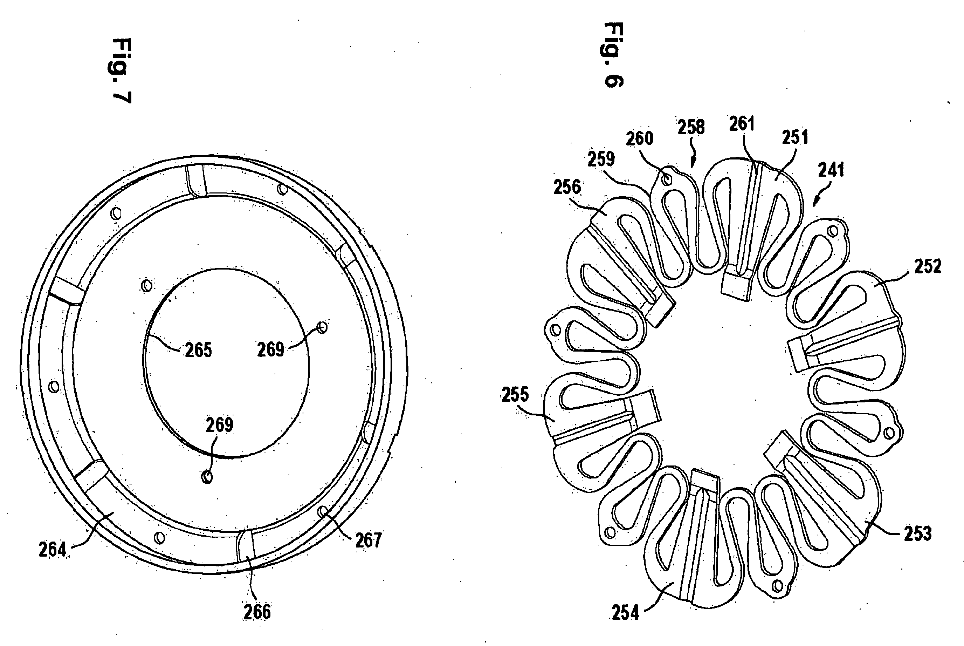

IIn den Figuren 6 bis 30 sind verschiedene Ansichten und Teile einer zugedrückten Kupplung mit Verschleißnachstellung und einer speziellen Hebelfeder gemäß einer weiteren Ausführungsform der Erfindung dargestellt.

In Figur 6 ist eine einteilige Tellerfeder zu 241, die auch als Mäanderfeder bezeichnet wird, in Alleinstellung dargestellt. Die Tellerfeder 241 umfasst sechs Einrückhebel 251, 252, 253, 254, 255 und 256, von denen jeweils drei einer Kupplung einer Doppelkupplung zugeordnet sind. Zwischen zwei Einrückhebeln 251, 256 sind mäanderförmige Windungen 258 ausgebildet, um die fedemden Elemente der Tellerfeder 241 so lang wie möglich auszubilden. Die mittlere mäanderförmige Windung 259 ist mit einem Durchgangsloch 260 versehen, das zur Aufnahme von Befestigungselementen dient, mit Hilfe derer die Tellerfeder 241 in einem Kupplungsdeckel befestigbar ist. Jeder der Einrückhebel 251 bis 256 ist mit einer länglichen Sicke 261 ausgestattet, die einerseits dazu dient die Stabilität der Einrückhebel zu verbessern und andererseits dazu dient, die Tellerfeder 241 bei der Montage zu fixieren.

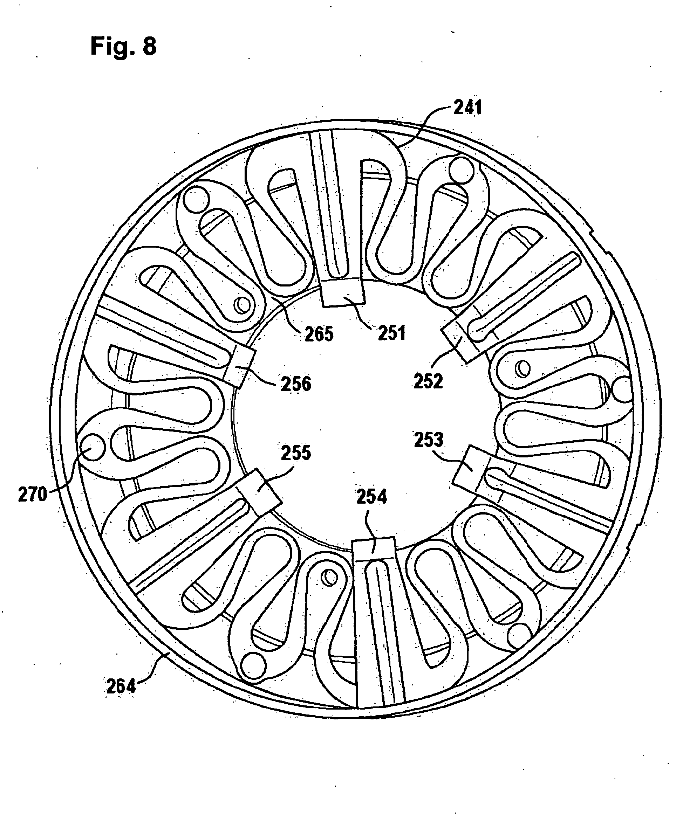

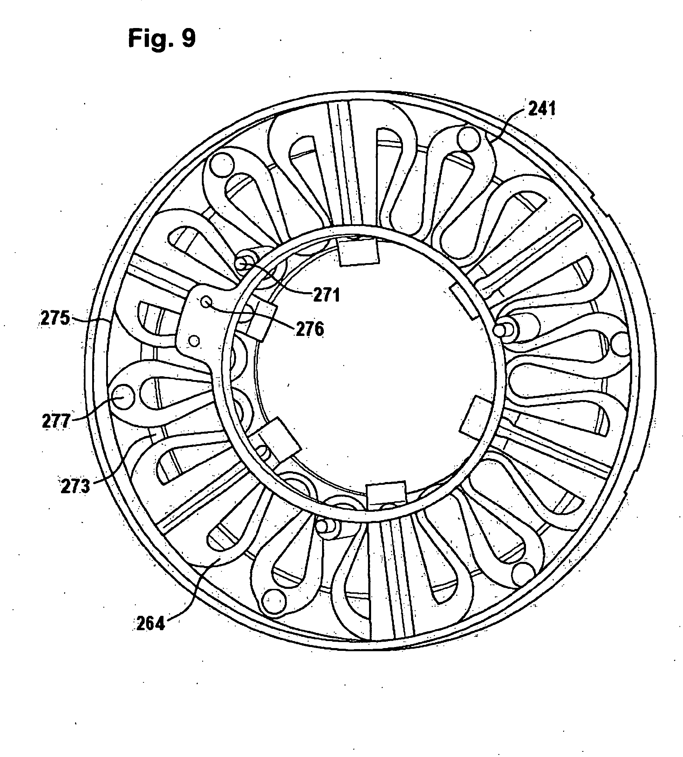

In Figur 7 ist ein Kupplungsdeckel 264 gezeigt, der im Wesentlichen tellerförmig ausgebildet ist, und eine zentrale Durchgangsöffnung 265 aufweist. Im Bereich des äußeren Randes des Kupplungsdeckels 264 sind Aussparungen 266 für die Sicke 261 an der Tellerfeder 241 (siehe Figur 33) vorgesehen. Zwischen den Aussparungen 266 sind Durchgangslöcher 267 ausgespart, die zur Aufnahme von Befestigungsmitteln dienen, mit Hilfe derer die Tellerfeder 241 an dem Kupplungsdeckel 264 befestigbar ist. Im Bereich des inneren Randes des Kupplungsdeckels 264 sind drei weitere Durchgangslöcher 269 vorgesehen, die zur Aufnahme von Stufenbolzen (siehe Figur 9) dienen.

In Figur 8 ist die Tellerfeder 241 mit Hilfe von Nieten 270 an dem Kupplungsdeckel 264 befestigt. Die freien Enden der Einrückhebel 251 bis 256 ragen in die zentrale Durchgangsöffnung 265, die in dem Kupplungsdeckel 264 ausgespart ist.

In Figur 9 sind in den Durchgangslöchern 269 des Kupplungsdeckels 264 Stufenbolzen 271 befestigt. Die Stufenbolzen 271 haben die Form von geraden Kreiszylindem mit einer umlaufenden Stufe an ihrem freien Ende. Die Stufen der Stufenbolzen 271 bilden Auflageflächen für einen Klemmring 273, der einen L-förmigen Querschnitt aufweist. An dem Klemmring 273 ist ein im Wesentlichen rechteckförmiger Ansatz 275 ausgebildet, in dem zwei Durchgangslöcher 276, 277 vorgesehen sind. Der Ansatz 275 erstreckt sich von dem Klemmring 273 radial nach außen. Der Klemmring 273 hat die Funktion eines Merkers für die Verschleißnachstellung. Wenn beim Betätigen der Kupplung ein Überweg gefahren wird, dann wird der Klemmring 273 frei und verdreht. Der Überweg kann gezielt oder bedingt durch Verschleiß willkürlich auftreten.

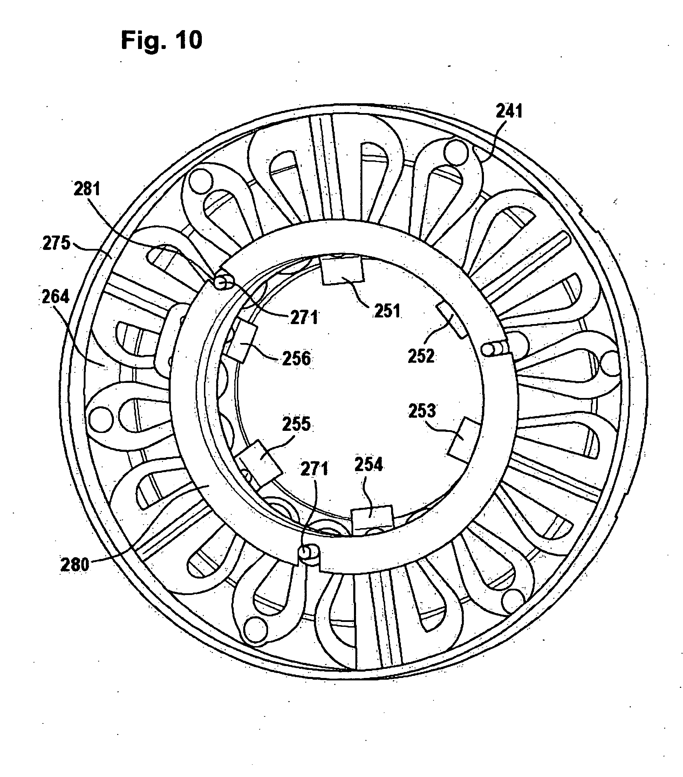

In Figur 10 ist ein Anschlagring 280 mit einem L-förmigen Querschnitt auf den Klemmring 273 aufgesetzt. Der Anschlagring 280 ist radial außen mit drei Ausnehmungen 281 ausgestattet, die zur Aufnahme der freien Enden der Stufenbolzen 271 dienen. Der Anschlagring 280 wird bei Überweg durch die Kupplungshebel 251 bis 256 angehoben. Im normalen, unbetätigten Zustand ist der Klemmring 273 zwischen dem Anschlagring 280 und den Stufenbolzen 271 eingeklemmt. Wenn der Anschlagring 280 bei Überweg durch die Einrückhebel 251 bis 256 angehoben wird, dann wird der Klemmring 273 freigegeben und kann sich verdrehen.

In Figur 11 sind an den freien Enden der Stufenbolzen 271 Klemmblattfedem 283 aufgenietet. Die Klemmblattfedem 283 sind so vorgespannt, dass sie den Anschlagring 280 gegen den darunter liegenden Klemmring 273 drücken und den Klemmring 273 dadurch am Verdrehen hindem. Die Klemmblattfedem 283 haben eine starke Progression und dienen damit gleichzeitig als Endanschlag für die hydraulische Betätigung der Kupplung.

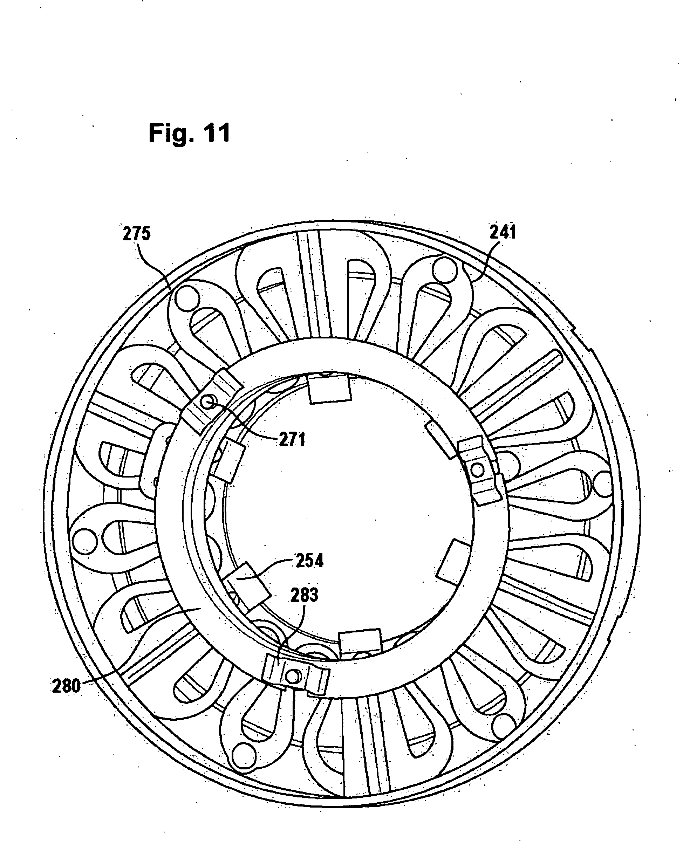

In Figur 12 ist ein innerer Rampenring 290 perspektivisch dargestellt, der radial innen drei Befestigungsansätze 291 aufweist, in denen jeweils ein Durchgangsloch 292 angeordnet ist. Der innere Rampenring 290 ist mit einer Steigung 293, insbesondere von 3,4 Grad, ausgestattet.

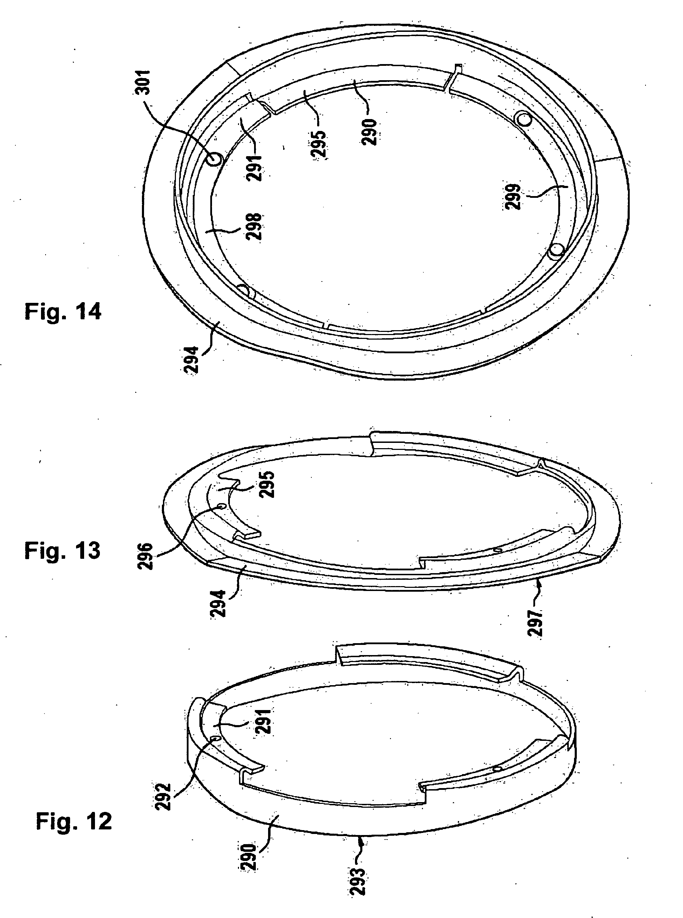

In Figur 13 ist ein äußerer Rampenring 294 perspektivisch dargestellt, der radial innen drei Befestigungsansätze 295 aufweist, die jeweils mit einem Durchgangsloch 296 versehen sind. Der äußere Rampenring 294 weist eine Steigung 297 auf.

In Figur 14 sind die beiden Rampenringe 290 und 294 durch Blattfedern 298, 299 miteinander verbunden. Die Blattfedem 298, 299 sind mit Hilfe von Nieten 300, 301 an den Durchgangslöchem 292, 296 befestigt. Durch die Blattfedem 298, 299 werden die beiden Rampenringe 290, 294 in ihrer Verdrehung synchronisiert.

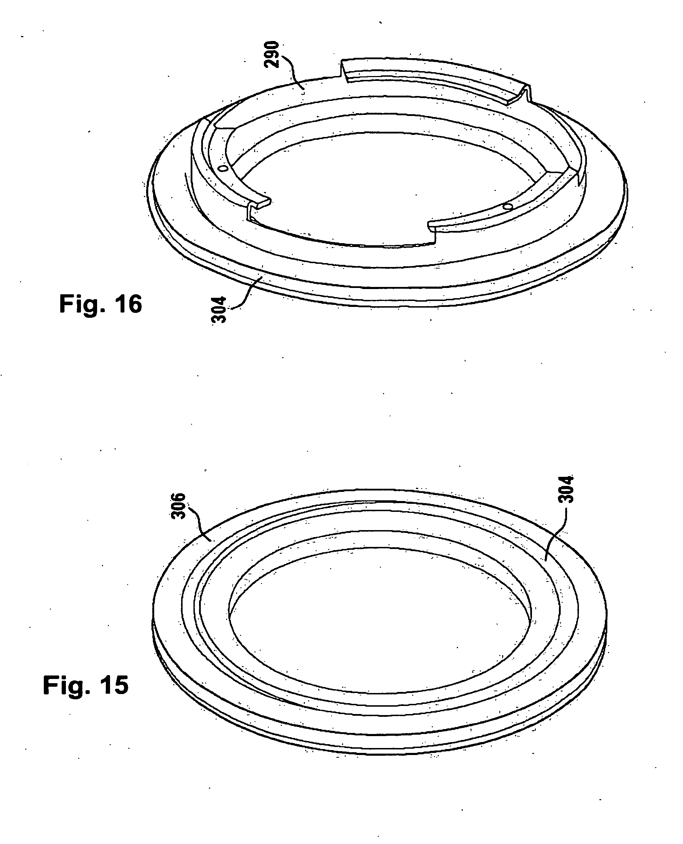

In Figur 15 ist eine Anpressplatte 304 perspektivisch dargestellt, die mit einer Gegenrampe 306 ausgestattet ist, und die eine Steigung von insbesondere 3,4 Grand aufweist.

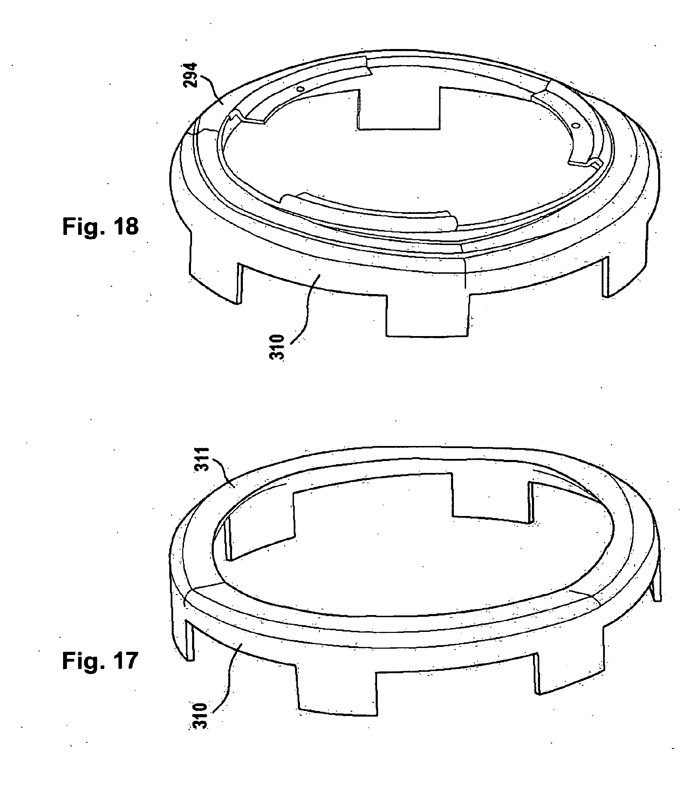

In Figur 16 ist die Anpressplatte 304 aus Figur 42 so mit dem inneren Rampenring 290 aus Figur 39 kombiniert, dass die Rampe 293 des inneren Rampenrings 290 an der Gegenrampe 306 der Anpressplatte 304 anliegt. Der durch die Blattfedern mit dem inneren Rampenring 290 gekoppelte äußere Rampenring ist in Figur 43 aus Gründen der Übersichtlichkeit nicht dargestellt.

In Figur 17 ist ein Durchgriffring 310 perspektivisch dargestellt, der mit einer Gegenrampe 311 ausgestattet ist, die eine Steigung von insbesondere 3,4 Grad aufweist. Der Durchgriffring 310 wirkt im zusammengebauten Zustand der Doppelkupplung mit einer der beiden Kupplungen zusammen.

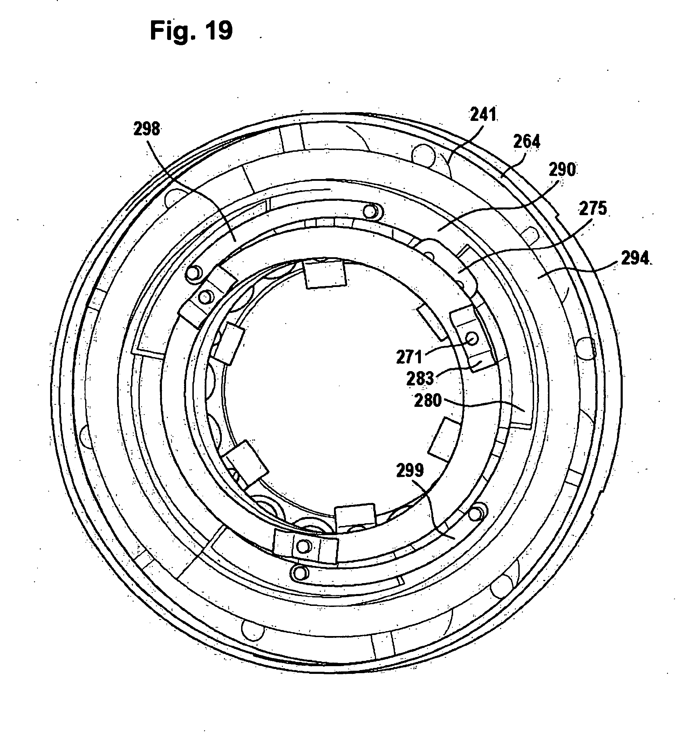

In Figur 18 ist der Durchgriffring 310 aus Figur 17 so mit dem äußeren Rampenring 294 kombiniert, dass die beiden Rampen aneinander anliegen.

In Figur 19 ist der Kupplungsdeckel 264 mit eingebauter Tellerfeder 241 dargestellt. Außerdem ist der Klemmring, von dem in Figur 19 nur der Ansatz 275 sichtbar ist, durch den Anschlagring 280 mit Hilfe der Klemmblattfedem 283 verklemmt. Radial außerhalb des Anschlagrings 280 sind der innere Rampenring 290 und der äußere Rampenring 294 angeordnet, die durch die Blattfedem 298, 299 miteinander verbunden sind.

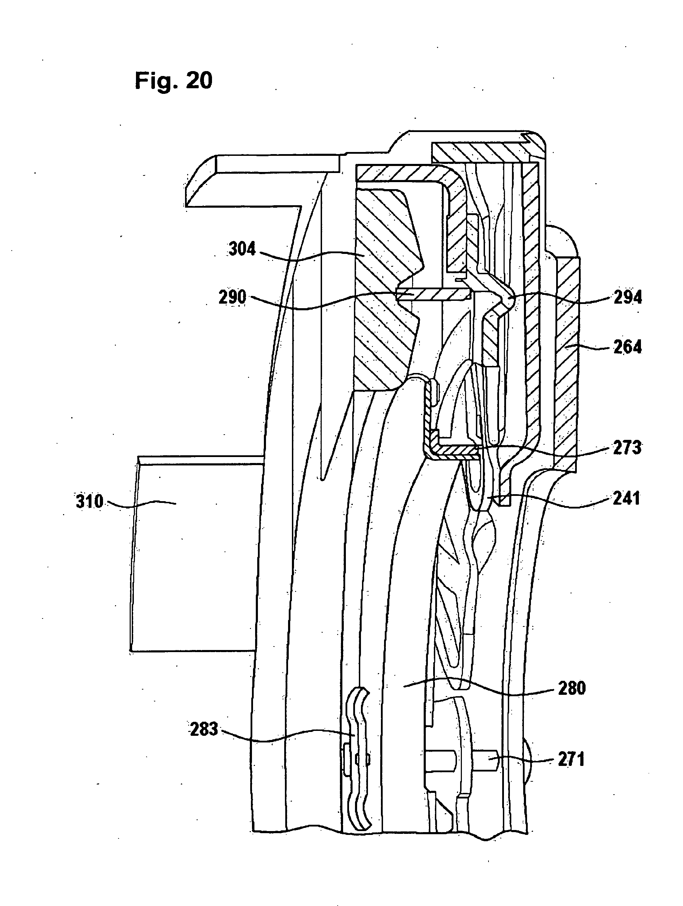

In Figur 20 ist die Anordnung aus Figur 19 mit zusätzlich eingebauter Anpressplatte 304 und Durchgriffring 310 im Schnitt dargestellt. Wie man sieht, wirkt der äußere Rampenring 294 mit dem Durchgriffring 310 und der innere Rampenring 290 mit der Anpressplatte 304 zusammen. Die Anpressplatte 304 ist radial innerhalb des Durchgriffrings 310 angeordnet.

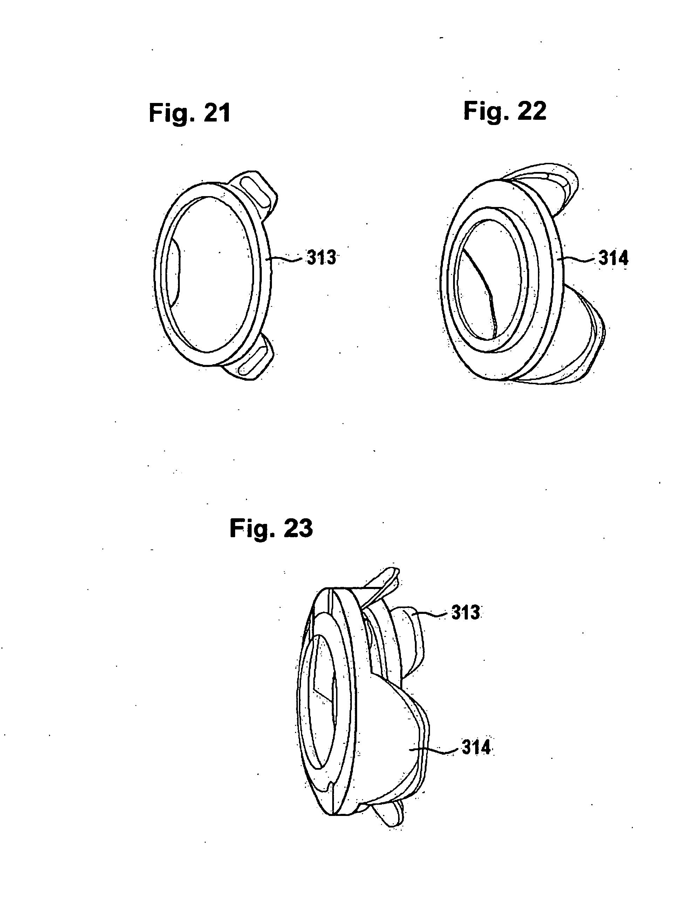

In den Figuren 21 und 22 sind zwei Betätigungsringe 313 und 314 einzeln perspektivisch dargestellt.

In Figur 23 sind die beiden Betätigungsringe 313 und 314 im zusammengesetzten Zustand dargestellt.

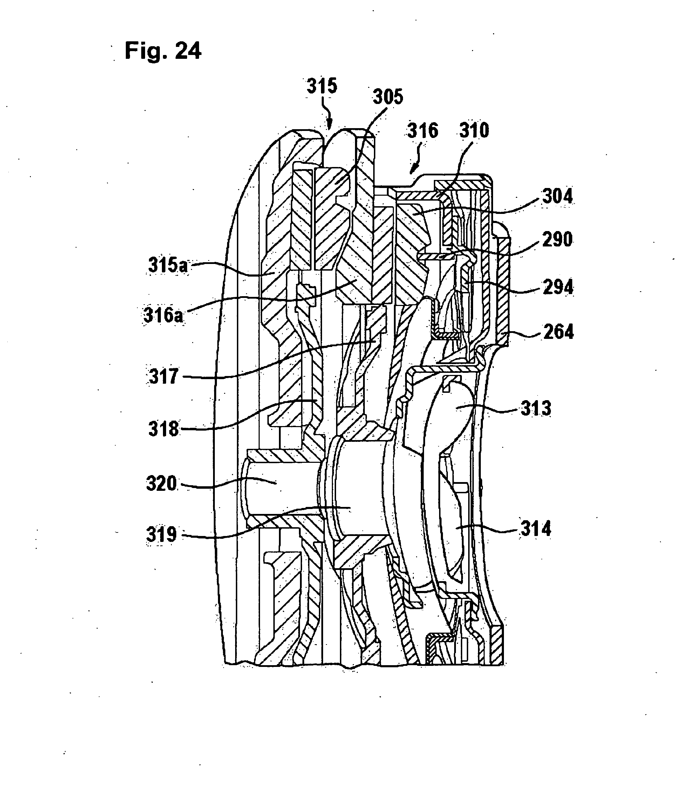

In Figur 24 ist die komplett zusammengebaute Doppelkupplung mit den beiden Kupplungen 315 und 316 im Schnitt dargestellt. Die Anpressplatte 304 der Kupplung 316 wirkt mit dem inneren Rampenring 290 zusammen. Die Anpressplatte 305 der Kupplung 315 wirkt über den Durchgriffring 310 mit dem äußeren Rampenring 294 zusammen. Die Gegendruckplatten sind mit 315a und 316a bezeichnet. Zwischen den Druckplatten, die auch als Anpressplatten bezeichnet werden und den Gegendruckplatten ist jeweils eine Kupplungsscheibe 317, 318 mit daran befestigten Reibbelägen angeordnet. Die Kupplungsscheiben 317, 318 wirken mit unterschiedlichen Wellen 319, 320 zusammen. Der Aufbau und die Funktion einer Doppelkupplung werden als bekannt vorausgesetzt und daher hier nicht weiter erläutert.

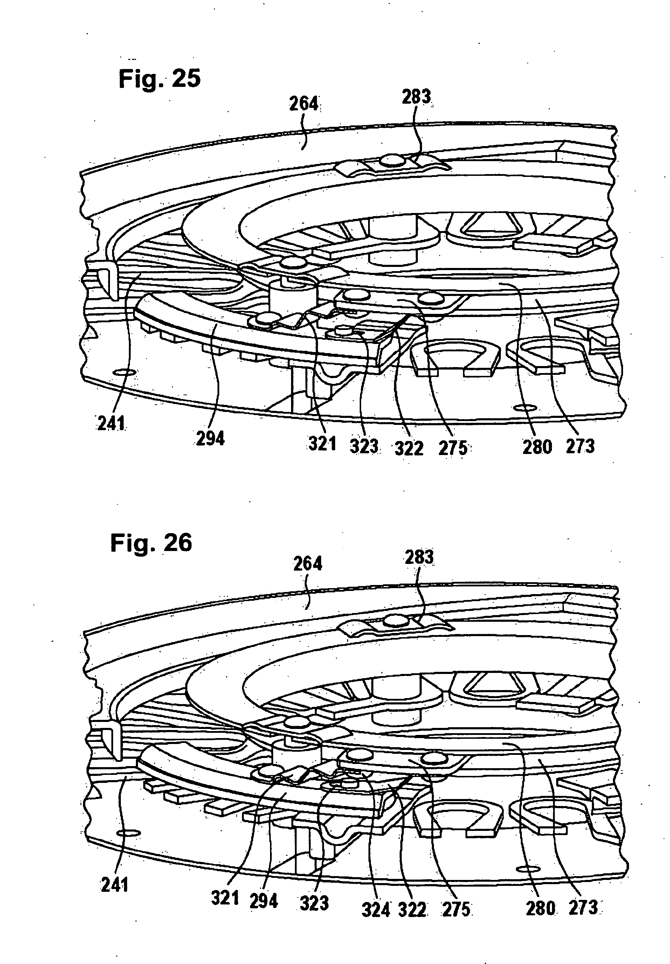

In den Figuren 25 bis 28 ist die Verschleißnachstellung anhand verschiedener Betriebszustände dargestellt. Wie man in den Figuren 25 bis 28 sieht, ist der äußere Rampenring 294 durch zwei Blattfederelemente 321, 322 mit dem Ansatz 275 des Klemmrings 273 gekoppelt. Die Blattfederelemente 321 und 322 sorgen für den Vortrieb zwischen dem Klemmring 273 und den Rampenringen.

In den Figuren 25 bis 29 ist der Vortriebsmechanismus beispielhaft zwischen dem Klemmring 273 und dem äußeren Rampenring 294 dargestellt. Der Vortriebsmechanismus zwischen dem Klemmring 273 und dem inneren Rampenring 290 funktioniert analog.

In Figur 25 befindet sich die Kupplung im unbetätigten Zustand. Der Klemmring 273 wird auf Grund der Vorspannkraft der Klemmblattfedem 283 durch den Anschlagring 280 gegen die Stufenbolzen 271 gedrückt und so verklemmt, dass er sich nicht verdrehen kann.

In Figur 26 ist die Kupplung im betätigten Zustand bei einem normalen Einrückvorgang ohne Verschleißauslösung dargestellt. Die Bewegung der Zungen ist in den Figuren 52 bis 56 nicht dargestellt. In Figur 26 ist der äußere Rampenring 294 in einem geringeren Abstand zu dem Klemmring 273 angeordnet. Dadurch werden die Blattfederelemente 321, 322 so verspannt, dass der aus dem äußeren Rampenring 294 herausragende Kopf eines Niets 323, bezogen auf den in Figur 52 dargestellten Zustand, an dem anderen Ende des Langlochs 323 zur Anlage kommt.

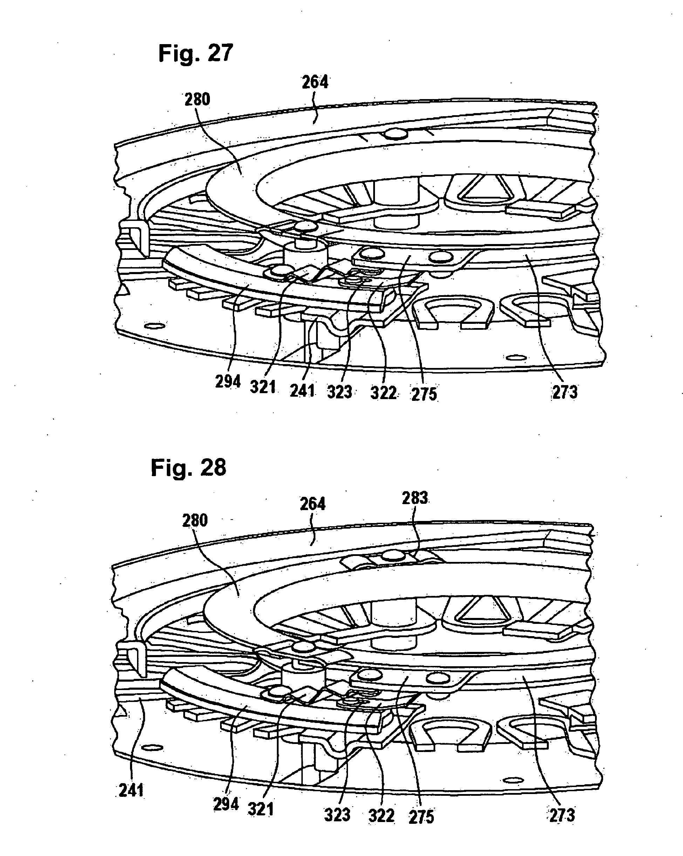

In Figur 27 ist an der Kupplung, insbesondere an den Reibbelägen der Kupplung, Verschleiß aufgetreten. Der Anschlagring 280 wird durch die Einrückhebel der Tellerfeder 241 entgegen der Vorspannkraft der Klemmblattfedem 283 angehoben, so dass sich der Klemmring 273 geringfügig nach rechts verdrehen kann. Die Verdrehung des Klemmrings 273 wird dabei durch ein Langloch 323 begrenzt, das in dem Blattfederelement 322 ausgespart ist.

In Figur 28 ist dargestellt, wie der Klemmring 273 bei einer erneuten Betätigung in seiner neuen Position auf Grund der Vorspannkraft der Klemmblattfedem 283 wieder zwischen dem Anschlagring 280 und den Stufenbolzen 271 eingeklemmt wird. Der Klemmring 273 hat sich also den aufgetretenen Verschleiß gemerkt.

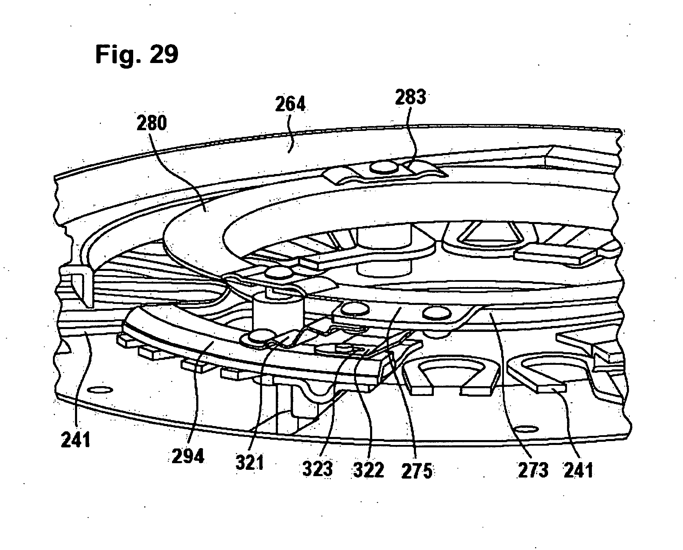

In Figur 29 ist der Vortriebsmechanismus im unbetätigten Zustand dargestellt. Der äußere Rampenring 294 wird durch die Blattfederelemente 321, 322 in eine neue Position gezogen, so dass der Verschleiß ausgeglichen ist. Die in den Figuren 25 bis 29 dargestellte Verschleißnachstellung vergrößert die Lebensdauer der Kupplungen. Außerdem wird eine Mindestrückstellkraft zum Lüften der Kupplungen gewährleistet. Darüber hinaus wird nur wenig axialer Bauraum benötigt.

Bei dem in den Figuren 6 bis dargestellten Kupplungsaggregat wird die Relativbewegung zwischen dem anpressplattenfesten Rampenring und dem Kupplungsdeckel genutzt, um eine Vortriebsbewegung für den Rampenring zu erzeugen. Die herkömmlichen Vortriebsfedem, die meist als Schraubendruckfedem ausgebildet sind und in Umfangsrichtung des Verstellrings wirken, können entfallen. Bei auftretendem Verschleiß, der sich durch einen Überweg bemerkbar macht, den die beiden Bauteile Rampenring und Klemmring abwechselnd geklemmt und gelöst. Dadurch entsteht eine Vortriebsbewegung für den Rampenring. Durch die Verdrehbewegung wird die Anpressplatte quasi immer dicker und kompensiert so die dünner werdende Kupplungsscheibe.

## Patentansprüche

1. Kupplungsaggregat zur Drehmomentübertragung zwischen einem Motor und einem Getriebe, mit mehreren, insbesondere zwei Reibungskupplungen (1, 2), die jeweils eine Druckplatte (6, 11) umfassen, die drehfest, jedoch axial begrenzt verlagerbar gegenüber einem Gehäuse (13) angeordnet ist, wobei zwischen Gehäuse (13) und Druckplatten (6, 11) eine Tellerfeder (16) wirksam ist, durch welche die Druckplatten (6, 11) in Richtung einer zwischen dieser und einer Gegendruckplatte (7, 12) einklemmbaren Kupplungsscheibe (3, 9) mit Reibbelägen (5, 10) beaufschlagbar sind, **dadurch gekennzeichnet, dass** die Druckplatten (6, 11) der Reibungskupplungen (1, 2) durch eine einzige Tellerfedereinrichtung (16) beaufschlagbar sind, die verschiedene Hebel (15, 22) aufweist, von denen einige mit der Druckplatte (6) einer der Reibungskupplungen (1, 2) und die anderen Hebel (22) mit der Druckplatte (11) der anderen Reibungskupplung (2) zusammenwirken.

2. Kupplungsaggregat nach Anspruch 1, **dadurch gekennzeichnet, dass** die Tellerfedereinrichtung (16) einen Ringkörper aufweist, von dem sich radial nach innen eine Vielzahl von Tellerfederhebeln (15, 22) erstrecken, von denen jeweils zwei benachbarte Tellerfederhebel unterschiedlichen Kupplungen (1, 2) zugeordnet sind.

3. Kupplungsaggregat nach Anspruch 2, **dadurch gekennzeichnet, dass** die Tellerfederhebel (15, 22) über Druckringe (17, 23) betätigbar sind, wobei jeweils ein Druckring einer Kupplung zugeordnet ist, und **dadurch**, dass die Druckplatten (6, 11) jeweils über einen Stößel (14, 21) durch die zugehörigen Tellerfederhebel (15, 22) beaufschlagbar sind, wobei die Druckringe (17, 23) und die Stößel (14, 21) so ausgebildet sind, dass ein Ineinandergreifen der bewegten Teile ermöglicht wird.

4. Kupplungsaggregat nach Anspruch 3, **dadurch gekennzeichnet, dass** der Stößel (14, 21) unter Zwischenschaltung eines Verformungselements (27) mit einem Verstellring (29) einer Verschleißnachstelleinrichtung zusammenwirkt.

5. Kupplungsaggregat zur Drehmomentübertragung zwischen einem Motor und einem Getriebe, mit mindestens zwei Reibungskupplungen (1, 2), die jeweils eine Druckplatte (6, 11) umfassen, die drehfest, jedoch axial begrenzt verlagerbar gegenüber einem Gehäuse (13) angeordnet ist, wobei zwischen Gehäuse (13) und Druckplatten (6, 11) eine Tellerfeder (16) wirksam ist, durch welche die Druckplatten (6, 11) jeweils in Richtung einer zwischen dieser und einer zugeordneten Gegendruckplatte (7, 12) einklemmbaren Kupplungsscheibe mit Reibbelägen beaufschlagbar sind, **dadurch gekennzeichnet, dass** die Tellerfeder (16) einen Ringkörper aufweist, der eine Vielzahl von Tellerfederhebeln (15, 22) trägt, die sich im Wesentlichen in radialer Richtung nach innen erstrecken, wobei einige der Tellerfederhebel zum Betätigen der einen Reibungskupplung und die anderen Tellerfederhebel zum Betätigen der anderen Reibungskupplung dienen.

## Claims

1. A clutch unit for transmitting torque between an engine and a transmission, having a plurality of friction clutches, in particular two friction clutches (1, 2), each of which includes a pressure plate (6, 11) which is positioned so that it is rotationally fixed but capable of limited axial movement with respect to a housing (13), wherein a diaphragm spring (16) acts between the housing (13) and the pressure plates (6, 11) whereby pressure may be applied to the pressure plates (6, 11) in the direction of a clutch disk (3, 9) with friction linings (5, 10) which is clampable between the pressure plate and an opposing pressure plate (7, 12), **characterized in that** the pressure plates (6, 11) of the friction clutches (1, 2) are pressurizable by a single diaphragm spring device (16) which has various levers (15, 22), some of which interact with the pressure plate (6) of one of the friction clutches (1, 2) and the other levers (22) interact with the pressure plate (11) of the other friction clutch (2).

2. A clutch unit according to Claim 1, **characterized in that** the diaphragm spring device (16) has a ring piece from which a large number of diaphragm spring levers (15, 22) extend radially inwardly, of which each pair of adjacent diaphragm spring levers are assigned to different clutches (1, 2).

3. A clutch unit according to Claim 2, **characterized in that** the diaphragm spring levers (15, 22) are operable by way of pressure rings (17, 23), where each pressure ring is assigned to a clutch, and **in that** the pressure plates (6, 11) are each pressurizable by the associated diaphragm spring lever (15, 22) by means of a plunger (14, 21), the pressure rings (17, 23) and the plungers (14, 21) being designed so that intermeshing of the moving parts is possible.

4. A clutch unit according to Claim 3, **characterized in that** the plunger (14, 21) interacts with an adjusting ring (29) of a wear adjustment device with an interposed deformation element (27).

5. A clutch unit for transmission of torque between an engine and a transmission, having at least two friction clutches (1, 2), each of which includes a pressure plate (6, 11) which is positioned so that it is rotationally fixed but capable of limited axial movement with respect to a housing (13), wherein a diaphragm spring (16) acts between the housing (13) and the pressure plates (6, 11) whereby pressure may be applied to the pressure plates (6, 11) in the direction of a clutch disk with friction linings which is clampable between the pressure plate and an opposing pressure plate (7, 12), **characterized in that** the diaphragm spring (16) has a ring piece which carries a large number of diaphragm spring levers (15, 22) that extend essentially radially inwardly, where some of the diaphragm spring levers serve to operate the one friction clutch and the other diaphragm spring levers serve to operate the other friction clutch.

## Revendications

1. Groupe d'embrayages servant à transmettre un couple entre un moteur et une boîte de vitesses, comprenant plusieurs, et en particulier deux, embrayages monodisques (1, 2) qui comportent chacun un plateau de poussée (6, 11) solidaire en rotation mais limité dans son déplacement axial par rapport à un boîtier (13), une rondelle Belleville (16) étant utilisée entre le boîtier (13) et les plateaux de poussée (6, 11) pour pouvoir charger les plateaux de poussée (6, 11) avec des garnitures de friction (5, 10) en direction d'un disque d'embrayage (3, 9) coincé entre le plateau de poussée et un plateau de contre-pression (7, 12),
**caractérisé en ce que**
les plateaux de poussée (6, 11) des embrayages monodisques (1, 2) peuvent être chargés par un seul dispositif de rondelle Belleville (16) qui présente différents leviers (15, 22), dont certains coopèrent avec le plateau de poussée (6) d'un des embrayages monodisques (1, 2) et les autres leviers (22) coopèrent avec le plateau de poussée (11) de l'autre embrayage monodisque (2).

2. Groupe d'embrayages selon la revendication 1,
**caractérisé en ce que**
le dispositif de rondelle Belleville (16) présente un corps annulaire duquel s'étendent radialement vers l'intérieur plusieurs leviers (15, 22) de la rondelle Belleville et deux leviers adjacents parmi ceux-ci sont à chaque fois associés à des embrayages (1, 2) différents.

3. Groupe d'embrayages selon la revendication 2,
**caractérisé en ce que**
les leviers (15, 22) de la rondelle Belleville peuvent être actionnés par des bagues de pression (17, 23), une bague de pression étant à chaque fois associée à un embrayage, et **en ce que**
les plateaux de poussée (6, 11) peuvent être chargés par les leviers (15, 22) correspondants de la rondelle Belleville à chaque fois via un poussoir (14, 21), les bagues de pression (17, 23) et les poussoirs (14, 21) étant réalisés de manière à permettre un emboîtement des pièces mobiles.

4. Groupe d'embrayages selon la revendication 3,
**caractérisé en ce que**
le poussoir (14, 21) coopère avec une bague de réglage (29) d'un dispositif de réglage d'usure en intercalant un élément de déformation (27).

5. Groupe d'embrayages servant à transmettre un couple entre un moteur et une boîte de vitesses, comprenant au moins deux embrayages monodisques (1, 2) qui comportent chacun un plateau de poussée (6, 11) solidaire en rotation mais limité dans son déplacement axial par rapport à un boîtier (13), une rondelle Belleville (16) étant utilisée entre le boîtier (13) et les plateaux de poussée (6, 11) pour pouvoir charger à chaque fois les plateaux de poussée (6, 11) avec des garnitures de friction (5, 10) en direction d'un disque d'embrayage (3, 9) coincé entre le plateau de poussée et un plateau de contre-pression (7, 12) associé,
**caractérisé en ce que**
la rondelle Belleville (16) présente un corps annulaire qui porte plusieurs leviers (15, 22) de rondelle Belleville s'étendant sensiblement dans la direction radiale vers l'intérieur, certains des leviers de la rondelle Belleville servant à actionner l'un des embrayages monodisques et les autres leviers de la rondelle de Belleville servant à actionner l'autre embrayage monodisque.
